# EUROPEAN PATENT APPLICATION

(11) **EP 4 474 038 A1**
(43) Date of publication of application: **11.12.2024**
(21) Application number: 23210781.3
(22) Date of filing: 18.11.2023
(51) Int. Cl.: B01D 53/02, B01D 53/04

(54) **METHOD OF REDUCING ODOROUS COMPOUNDS FROM CATERING AND FARMING USING NATURAL ZEOLITE**

(30) Priority: 21.03.2023 PL 44415123
(71) Applicant: ZEOCOMPLEX Spólka z ograniczona Odpowiedzialnoscia, 30-832 Kraków (PL)
(72) Inventor: CZEKAJ, Izabela, 32-051 Jaskowice (PL); SOBU , Natalia, 39-200 Debica (PL)
(74) Representative: Krawczyk, Lilianna

(57) **Abstract**

A method for reducing odorous compounds produced in food industry and animal husbandry, using absorbing systems consisting of natural zeolite, is characterised in that a specially prepared sorption material - natural zeolite, clinoptilolite - is used alone or with additives, placed in charging beds, and the thickness of the adsorption layer is from 5 to 15 cm, and then, waste gases containing odorous compounds are passed through the sorbent bed at a rate 150 m3/h, which adsorb in clinoptilolite grains, the size of the adsorbent particles is from 1-5 mm, the process takes place at a temperature from 20 to 30°C, preferably from 23 to 28°C, and the efficiency of the reduction process is from 15 to 100% and depends on the type of substance being reduced.

## Description

The subject of the invention is a method for reducing odorous compounds formed in food industry and animal breeding using deposits consisting of previously processed natural zeolite. The reduction method is intended for use in purifying waste gases containing odorous substances generated during food industry processes, e.g. frying, baking, as well as in animal farming, e.g. pigs and poultry.

There is a problem with the emission of foul odors in a number of industrial and food industry plants or on farms specializing in animal breeding.

Catering processes, where products are processed at high temperatures, are a source of organic compounds, including: n-alkanes, polycyclic aromatic hydrocarbons, fatty acids, as well as aromatic amines and heterocyclic aromatic amines. Among the emitted compounds, formaldehyde, acetaldehyde, acrolein, dimethylamine and volatile organic compounds, including acetone, toluene and octane, seem to be the most important from the point of view of harmfulness to the environment.

There are numerous odorants in farm rooms and in the air around pigsties and poultry farms, such as: hydrogen sulphide, ammonia, thiols, sulphides and aromatic amines, heterocyclic organic compounds containing sulphur or nitrogen, aliphatic alcohols or phenols, ketones, aldehydes, aliphatic acids, esters, as well as toluene and xylene. These compounds constitute a big problem and are burdensome to the environment.

There are known methods of eliminating undesirable odorous substances, which involve introducing a stream of gases containing odorous substances into the combustion zone, where their degradation takes place.

Methods are also used that involve the absorption of odorous substances in water or special solutions. These methods have limited application, mainly to compounds with lower molecular weights, highly soluble in the solutions used or easily reacting with the components of the solutions.

Zeolites are a group of hydrated aluminosilicates with a microporous structure. They are characterised by an extensive specific surface and the ability to undergo ion exchange. These materials are used as membranes, adsorbents, ion exchangers, catalysts and molecular sieves for the purification of industrial and municipal pollutants.

Aluminosilicates include zeolites of synthetic and natural origin. Natural zeolites (i.e. found in volcanic sedimentary rocks) have been and are used as building stone, as lightweight aggregate, in cements and concretes, as a filler in paper, in agronomy and horticulture, in the removal of ammonia from municipal, industrial and agricultural waste, and drinking water, as energy exchangers in solar refrigerators, as dietary supplements, liners, kidney filters, assemblies in Roman times, due to their role as hydroponic (zeoponic) substrates for growing plants. Natural zeolites are currently considered mineral raw materials the use of which will increase in the future.

Properly modified clinoptilolite minerals show selectivity towards cations and anions and can be used as a material for removing contaminants. Many studies have been carried out on the activation of clinoptilolite by thermal treatment or acid treatment, which results in the removal of cations from the zeolite structure and pores - obtaining H-zeolite forms and partial degradation of the crystal structure (dealumination). Two possible modifications of natural zeolite were developed based on that: (i) transformation into the ammonium form of zeolite and thermal treatment, (ii) direct ion exchange in a dilute acid solution. Activated natural zeolite has been used as an adsorbent to remove pollutants and has been shown to be more effective than activated carbon. Additionally, the presence of metals such as Zn and Ag allows for efficiency of up to 90% when purifying water. In a papaer by Russo et al. ( AV Russo et al., Adsorption and catalytic oxidation of organic pollutants using Fe-zeolite, Water Science & Technology, 2017), the adsorption process was carried out using a natural zeolite - clinoptilolite, modified with iron to remove BTX compounds (benzene, toluene, xylene) from groundwater. Preliminary research suggests the promising use of iron-modified clinoptilolite. The combination of adsorption and catalytic oxidation made it possible to remove BTX organic contaminants (15 mg) from an aqueous solution with a neutral pH, without releasing iron ions from the zeolite structure.

An aerofilter is known from the patent description PL214915**,** which has a housing with the lower part constituting an air inlet mounted on supports. The central part is a chamber with walls having guides with a drawer, and a filter insert with absorbing material. The fan with the drive unit and the control panel are mounted in the upper part of the aforementioned housing. The aerofilter can be used in farm buildings where there is a high concentration of harmful and odorous gases, especially ammonia and hydrogen sulphide, as well as dust and microorganisms. The sorbing material used in the aerofilter is a modified mineral sorbent with the following composition: SiO₂ in the amount from 1.0 to 95.0% by mass, Al₂O₃ in the amount from 1.0 to 50.0% by mass, Fe₂O₃ in the amount from 0.1 to 50.0% by mass, CaO in an amount from 0.1 to 25.0% by mass, MgO in an amount from 0.1 to 30% by mass and other organic and inorganic structural additives in an amount from 0.001 to 10.0% by mass.

The subject of application **P.421389** is a method and device for deodorisation of gases, such as air, biogas, etc. by removing odorous substances such as hydrogen sulphide and ammonia and processing them into fertilizers. Hydrogen sulphide generated during biomass composting is removed from the circulating air by contact with an aqueous solution of transition metal complexes and humic acids and oxidized to elemental sulphur, but the sulphur precipitated in the process forms sulphur-humic colloids with the humic acids contained in the solution, which are granulated or dried, preferably supplemented with other fertilizer ingredients. The air, still odorous but free of hydrogen sulphide, is directed to absorb ammonia with an aqueous solution of humic acids. Next, depending on the type and concentration of other odorous substances contained in the stream, the air is returned to the composters, directed to combustion or to a solid bed to remove the remaining odorous substances before releasing them to the environment.

The method for removing odours carried by fatty compounds according to the invention, patent no. PL220545**,** consists of passing the waste gases through a fluidized bed scrubber sprayed with a contact liquid containing an aqueous solution of hydrogen peroxide with a concentration ranging from 1 to 5 percent by weight, where the solid phase of the bed filling consists of foamed polypropylene balls with a diameter of less than 30 mm, and the exhaust gases are passed through the scrubber countercurrently to the contact liquid in the presence of atmospheric oxygen. Before being supplied to the scrubber, the waste gases are contacted with hot steam to obtain a temperature in the range of 75 to 95°C, and then cooled to a temperature below 50°C by direct water injection into the flow channel, and then condensate is separated from the waste gases using a cyclone, from which the waste gases are fed directly to the scrubber. While passing waste gases through the scrubber into the fluidized bed, a solution of quaternary ammonium salts is introduced as a phase transition catalyst in the process of odorous substance oxidation, and the contact liquid removed by gravity from the scrubber is continuously reintroduced to the scrubber using spray nozzles generating water mist, filling the scrubber space above the fluidized bed, and the purified gas is discharged from the scrubber through a drop separator: located between the spray nozzles and the outlet channel.

The method and systems for purifying contaminants are known from the American patent description US10807039**.** The methods use biodegradable, nontoxic materials that may have one or more functions useful for fluid recultivation, such as liquid or gaseous waste streams, chemical spills, etc. The carrier materials carry one or more functional groups that can target specific fluid contaminants for removal and/or modification to a more mild form. Target contaminants may include gaseous and/or liquid components such as, but not limited to, gaseous discharges, including VOCs and potentially hazardous contaminants such as organophosphates.

Unexpectedly, it turned out that odorous compounds have a high similarity in adsorption inside zeolites due to chemical similarity or the presence of functional groups that adsorb in a similar way. Ammonia and dimethylamine adsorb on the same adsorption centres, just like amines, for example methylamine, indole, or thiols. The same applies to numerous organic acids, therefore it is possible to remove numerous different odorous substances in a single process, using one adsorption system.

The aim of the invention is to develop a method for removing odorous compounds, both organic and inorganic, in a single process using natural zeolite as an adsorption material.

According to the invention, a method for reducing odorous compounds produced in food industry and animal husbandry, using absorbing systems consisting of natural zeolite, is characterised in that a specially prepared sorption material - natural zeolite, clinoptilolite - is used alone or with additives, placed in charging beds, and the thickness of the adsorption layer is from 5 to 15 cm, and then, waste gases containing odorous compounds are passed through the sorbent bed at a rate 150 m³/h, which adsorb in clinoptilolite grains, the size of the adsorbent particles is from 1-5 mm, the process takes place at a temperature from 20 to 30°C, preferably from 23 to 28°C, and the efficiency of the reduction process is from 15 to 100% and depends on the type of substance being reduced.

Preferably, zeolite of the clinoptilolite type is used as sorption material with a fraction of 2-4 or 3-5 mm and a composition of SiO₂ - 64.18-75.5 %; Na₂O - 0.10-2.97 %; Al₂O₃ - 10.93-14.80 % TiO₂ - 0.08-0.39 %; CaO - 1.43-11.68 % P₂O₅ - 0.01-0.18 %; K₂O - 1.24-4.24 % FeO - 0.29-1.43 %; Fe₂O₃ - 0.12-2.45 % SO₃ - 0.00-0.23 %; MgO - 0.29-1.43 %; with Si/Al ratio - 4.8/5.4, wherein adsorbent was subjected to a drying process before being introduced into the charging bed, so that the moisture content does not exceed 5%.

Preferably, zeolite of the clinoptilolite type is used as sorption material, with a fraction of 2-4 or 3-5 mm and a composition of SiO₂ - 64.18-75.5 %; Na₂O - 0.10-2.97 %; Al₂O₃ - 10.93-14.80 % TiO₂ - 0.08-0.39 %; CaO - 1.43-11.68 % P₂O₅ - 0.01-0.18 %; K₂O - 1.24-4.24 % FeO - 0.29-1.43 %; Fe₂O₃ - 0.12-2.45 % SO₃ - 0.00-0.23 %; MgO - 0.29-1.43 %; Si/Al ratio - 4.8/5.4, combined with activated carbon with a particle size of 2-4 or 3-5 mm in a 1:1 ratio, and the zeolite was subjected to a drying process before being introduced into the charging bed so that moisture content does not exceed 5%.

Preferably, zeolite of the clinoptilolite type is used as sorption material, with a particle size of 2-4 or 3-5 mm in the form of compacted granules, pellets and with the following composition SiO₂ - 64.18-75.5 %; Na₂O - 0.10-2.97 %; Al₂O₃ - 10.93-14.80 % TiO₂ - 0.08-0.39 %; CaO - 1.43-11.68 % P₂O₅ - 0.01-0.18 %; K₂O - 1.24-4.24 % FeO - 0.29-1.43 %; Fe₂O₃ - 0.12-2.45 % SO₃ - 0.00-0.23 %; MgO - 0.29-1.43 %; Si/Al ratio - 4.8/5.4, and the adsorbent was subjected to a drying process before being introduced into the charging bed so that the moisture content does not exceed 5%.

Preferably, zeolite of the clinoptilolite type is used as sorption material, with a particle size of 2-4 or 3-5 mm in combination with activated carbon with a particle size of 2-4 or 3-5 mm in a 1:1 ratio, and the zeolite particles are in the form of compacted granules, pellets and the following composition: SiO₂ - 64.18-75.5 %; Na₂O - 0.10-2.97 %; Al₂O₃ - 10.93-14.80 % TiO₂ - 0.08-0.39 %; CaO - 1.43-11.68 % P₂O₅ - 0.01-0.18 %; K₂O - 1.24-4.24 % FeO - 0.29-1.43 %; Fe₂O₃ - 0.12-2.45 % SO₃ - 0.00-0.23 %; MgO - 0.29-1.43 %; Si/Al ratio - 4.8/5.4, and the zeolite, before being introduced into the charging bed, was subjected to a drying process, so that the moisture content does not exceed 5%.

Preferably, the adsorption material, before being introduced into the charging bed, was subjected to a drying process in a rotary dryer, in which the temperature at the entrance of the material being dried to the dryer is 450°C, and the adsorption material has a temperature of 85-90 °C at the exit from the dryer, and the residence time of the material in the dryer does not exceed 0.5 hour, during which time the moisture content in the absorbent material decreased from 14% at the entrance to the dryer to a value not exceeding 5% at the exit from the dryer.

Preferably, waste gases from food industry processes, containing aldehydes, acrolein, amines, volatile organic compounds including acetone, toluene and octane, are the source of odorous gases.

Preferably, waste gases from breeding processes, containing C1-C9 carboxylic acids, phenol, cresol, ammonia, skatole, indole, are the source of odorous gases.

Preferably, the adsorption efficiency of odorous nitrogen compounds is from 100 to 92%, preferably the ammonia reduction is up to 100%, and the dimethylamine reduction is up to 92%.

Preferably, the adsorption efficiency of odorous aldehydes, preferably acetaldehyde, is up to 94%.

Preferably, the adsorption efficiency of individual odorous carboxylic acids, preferably propionic and/or pentanoic and/or octanoic acids, ranges from 70 to 94%.

Preferably, the adsorption efficiency of the odorous compound mixture, preferably aldehydes and carboxylic acids, including propionic and/or pentanoic and/or octanoic acids, is, acetaldehyde up to 61%, propanoic acid up to 23%, pentanoic acid up to 35% and octanoic acid up to 15%, respectively.
Preferably, the adsorption efficiency of the odorous compound mixture, including volatile organic compounds and formaldehyde, is VOC reduction up to 55% and formaldehyde reduction up to 26%.

The advantage of the method according to the invention is the ability to program the adsorption of odorous compounds by appropriate size modification of the adsorption layers used, depending on the application to reduce odorous compounds of various origins.

The method according to the invention can reduce inorganic and organic odorous compounds by adsorption in the zeolite pores of inorganic nitrogen compound odorous groups, such as: ammonia, organic nitrogen compounds - urea, amines, e.g. dimethylamine, volatile organic compounds such as formaldehyde, acetaldehyde, C1-C8 carboxylic acids, for example acetic acid, butyric acid, up to and including octanoic acid, skatole, indole.

Compared to known methods of reducing odorous compounds, the method according to the invention allows the use of natural material without the need for the environmentally burdensome adsorption material synthesis, which can then be disposed of in an environmentally less burdensome way.

The invention is presented in exemplary embodiments and in the drawings in which Fig. 1 shows the diffractogram of clinoptilolite, Fig. 2. topography of clinoptilolite (CLI) made using a scanning electron microscope - SEM, along with the percentage of individual elements at a specific measurement point using an EDS detector (energy dispersive X-ray spectroscopy), Fig.3. provides the percentage dependence of the ammonia concentration reduction on a 15 cm thick bed depending on the duration of the test; the test was carried out with different amounts of dosed ammonia, Fig. 4. shows the percentage dependence of ammonia concentration reduction on a 15 cm thick bed depending on the process duration with the following parameters: ammonia dosing 5 l/h, gas flow rate Q = 150 and 250 m³/h, Fig. 5 shows the percentage dependence of ammonia concentration reduction on a 5 cm thick bed depending on the process duration with the following parameters: ammonia dosing 2, 3, 5 l/h, gas flow rate Q = 250 m³/h.

The method according to the invention was carried out in the liquid phase using thermostated quartz reactors with a magnetic mixing system and in the gas phase on a laboratory adsorption test stand equipped with a tubular reactor with a fixed bed of adsorbent, coupled to a chromatographic measurement line, and on the test stand adsorption plants in the gas phase, equipped with a tubular reactor with a fixed bed of adsorbent. The adsorption process to the zeolite was carried out with selected chemical compounds : acetaldehyde (AD), dimethylamine (DMA) and carboxylic acids: propionic (PA), pentanoic (VA) and octanoic acid (OA). The liquid supernatant was analyzed using an Agilent 6890N gas chromatograph with a BP21 FFAP capillary column with a length of 60 m and a diameter of 0.25 mm, and a flame ionization detector. A nitrogen-phosphorus detector was used to analyze dimethylamine. The tests were carried out on a laboratory scale and then confirmed on benches on a semi-technical scale and in real conditions.

### Example 1

The adsorption process of acetaldehyde in the liquid phase was analysed. In the acetaldehyde adsorption test in the liquid phase, 0.4 g of a 5% acetaldehyde solution dissolved in 10 mL of 96% ethanol as a solvent was used for 1 g of zeolite. The tests were carried out at a temperature of 25°C. The process was carried out for 5 hours, with a sample taken every hour for chromatographic measurements using an Agilent 6890N gas chromatograph with a BP21 FFAP capillary column with a length of 60 m and a diameter of 0.25 mm and a flame-ionization detector. The identification of this compound was made by comparing the retention time with the standard substance - acetaldehyde. Then, on the basis of the area of characteristic peaks, the content of acetaldehyde in the ethanol solution was determined, and the same was done for samples after the appropriate process time. The amount of acetaldehyde adsorbed inside the zeolite was determined based on the difference in peak areas.

The results obtained for two clinoptilolite fractions (1-2 and 3-5 mm) are presented in Table 1.1.

**Table 1.1**

| Adsorption process time [h] | *Acetaldehyde adsorption efficiency [%]* | |
|---|---|---|
| | CLI 1-2 mm | CLI 3-5 mm |
| 1 | 93.5 | 92.7 |
| 2 | 90.0 | 93.7 |
| 3 | 85.3 | 88.7 |
| 4 | 92.4 | 94.1 |
| 5 | 90.6 | 71.4 |

The method according to the invention presented in Example 1 leads to a highly effective adsorption acetaldehyde process in the range of 70-94% in the clinoptilolite pores.

The process used zeolite - clinoptilolite from a deposit located in Slovakia. The following fractions were used for tests: 1-2 mm and 3-5 mm.

The characteristics of clinoptilolite samples were tested using physicochemical methods such as: powder X-ray diffraction (XRD), X-ray fluorescence (XRF), scanning electron microscopy with an X-ray energy dispersive spectroscopy detector (SEM-EDS), and the specific surface area was determined by adsorption isotherm analysis using the BET isotherm.

The result from the BET analysis shows the specific surface area of the material, which is 25.5 m²/g. On the other hand, the XRF results show the composition of zeolite along with the mass fraction [%] of individual oxides that build the clinoptilolte structure relative to each other: SiO₂ - 64.18-75.5 %; Na₂O - 0.10-2.97 %; Al₂O₃ - 10.93-14.80 % TiO₂ - 0.08-0.39 %; CaO - 1.43-11.68 % P₂O₅ - 0.01-0.18 %; K₂O - 1.24-4.24 % FeO - 0.29-1.43 %; Fe₂O₃ - 0.12-2.45 % SO₃ - 0.00-0.23 %; MgO - 0.29-1.43 %.

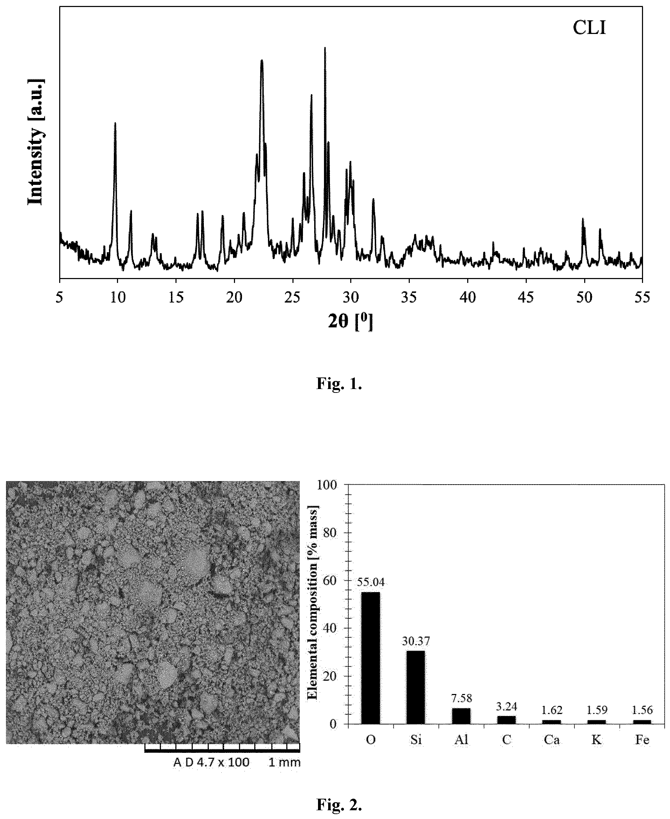

**Fig. 1** shows the diffractogram of the natural clinoptilolite form - CLI. Despite the presence of other crystalline phases, which are present due to the natural origin of the material, such as illite or quartz, clinoptilolite is the dominant crystalline phase. This can be seen at 2 *θ* around 10, 20-25 and 27°.

The surface of clinoptilolite samples and its elemental composition were examined using a scanning electron microscope with an EDS detector - the results obtained are presented in a graph and a photo - **Fig. 2****.** Measurements of the elemental composition were made for the natural zeolite clinoptilolite CLI. A locally scanned sample shows that the following elements are present in its structure: Si, Al, Ca, K, O and C, as well as small amounts of Fe. The elemental composition is also confirmed by XRF analysis.

### Example 2

The adsorption process of propionic acid in the liquid and gas phase was examined. In the tests on the propionic acid adsorption in the liquid phase, 0.4 g of a 5% solution of propionic acid dissolved in 10 mL of 96% ethanol as a solvent was used for 1 g of zeolite. The tests were carried out at a temperature of 25°C. The process was carried out for 5 hours, with a sample taken every hour for chromatographic measurements using an Agilent 6890N gas chromatograph with a BP21 FFAP capillary column, 60 m long and 0.25 mm in diameter, and a flame-ionization detector. The adsorption efficiency of propionic acid was determined on the basis of the acid peak area in the initial solution and after the appropriate process time, analogously as described in Example 1. In the gas phase, the adsorbant was a 5% solution of propionic acid with a flow rate of 2 cm³/h, injected by an infusion pump. The adsorbant then went to the mixer, where it was mixed with the inert gas nitrogen and transformed into the gas phase at a temperature of 130°C. Propionic acid vapours, driven by a stream of inert gas (nitrogen) at a speed of 30 mL/min, landed on the adsorbent bed - clinnotillolite with a fraction of 1-2 mm and 3-5 mm, in an amount of 1 g, where the adsorption process took place.

The results obtained for two clinoptilolite fractions (1-2 and 3-5 mm) are presented in Table 2.1.

**Table 2.1**

| Adsorption process time [h] | Propionic acid adsorption efficiency in the liquid phase [%] | | Propionic acid adsorption efficiency in the gas phase [%] | |
|---|---|---|---|---|
| | CLI 1-2 mm | CLI 3-5 mm | CLI 1-2 mm | CLI 3-5 mm |
| 1 | 90.0 | 96.0 | 98.4 | 99.8 |
| 2 | 95.7 | 94.5 | 91.9 | 78.0 |
| 3 | 90.5 | 96.8 | 80.0 | 92.0 |
| 4 | 93.5 | 93.3 | 86.7 | 79.3 |
| 5 | 94.9 | 92.8 | 81.6 | 69.1 |

The method according to the invention presented in Example 2 leads to a highly effective propionic acid adsorption process, in the range of 90-97% in the clinoptilolite pores in case of the process carried out in the liquid phase, and in the range of 70-99% in the clinoptilolite pores in case of the process carried out in the gas phase.

### Example 3

The pentanoic acid adsorption process in the liquid phase was analysed. In the tests on the pentanoic acid adsorption in the liquid phase, 0.4 g of a 5% solution of pentanoic acid dissolved in 10 mL of 96% ethanol as a solvent was used for 1 g of zeolite. The tests were carried out at a temperature of 25°C. The process was carried out for 5 hours, with a sample taken every hour for chromatographic measurements using an Agilent 6890N gas chromatograph with a BP21 FFAP capillary column with a length of 60 m and a diameter of 0.25 mm and a flame-ionization detector. The adsorption efficiency of pentanoic acid was determined on the basis of the acid peak area in the initial solution and after the appropriate process time, analogously as described in Example 1.

The results obtained for two clinoptilolite fractions (1-2 and 3-5 mm) are presented in Table 3.1.

**Table 3.1**

| Adsorption process time [h] | Pentanoic acid adsorption efficiency in the liquid phase [%] | |
|---|---|---|
| | CLI 1-2 mm | CLI 3-5 mm |
| 1 | 97.5 | 95.0 |
| 2 | 91.8 | 98.5 |
| 3 | 90.1 | 96.0 |
| 4 | 96.8 | 91.9 |
| 5 | 96.5 | 98.0 |

The method according to the invention presented in Example No. 3 leads to a highly effective pentanoic acid adsorption process in the range of 90-98% in clinoptilolite pores in case of the process carried out in the liquid phase.

### Example 4

The adsorption process of octanoic acid in the liquid phase was analysed. In the tests on the octanoic acid adsorption in the liquid phase, 0.4 g of a 5% solution of octanoic acid dissolved in 10 mL of 96% ethanol as a solvent was used for 1 g of zeolite. The tests were carried out at a temperature of 25°C. The process was carried out for 5 hours, with a sample taken every hour for chromatographic measurements using an Agilent 6890N gas chromatograph with a BP21 FFAP capillary column with a length of 60 m and a diameter of 0.25 mm and a flame-ionization detector. The adsorption efficiency of octanoic acid was determined on the basis of the acid peak area in the initial solution and after the appropriate process time, analogously as described in Example 1.

The results obtained for two clinoptilolite fractions (1-2 and 3-5 mm) are presented in Table 4.1.

**Table 4.1**

| Adsorption process time [h] | Octanoic acid adsorption efficiency in the liquid phase [%] | |
|---|---|---|
| | CLI 1-2 mm | CLI 3-5 mm |
| 1 | 97.5 | 95.0 |
| 2 | 91.8 | 98.5 |
| 3 | 90.1 | 96.0 |
| 4 | 96.8 | 91.9 |
| 5 | 96.5 | 98.0 |

The method according to the invention presented in Example No. 4 leads to a highly effective octanoic acid adsorption process in the range of 90-98% in clinoptilolite pores in case of the process carried out in the liquid phase.

### Example 5

The adsorption process of dimethylamine acid in the liquid phase was analysed. In the tests on dimethylamine adsorption in the liquid phase, 0.8 g of a 5% dimethylamine solution dissolved in 10 mL of 96% ethanol as a solvent was used for 1 g of zeolite. The tests were carried out at a temperature of 25°C. The process was carried out for 5 hours, with a sample taken every hour for chromatographic measurements using an Agilent 6890N gas chromatograph with a BP21 FFAP capillary column, 60 m length, and with a diameter of 0.25 mm and a nitrogen-phosphorus detector. The adsorption efficiency of dimethylamine was determined on the basis of the DMA peak area in the initial solution and after the appropriate process time, proceeding analogously as described in Example 1.

The results obtained for two clinoptilolite fractions (1-2 and 3-5 mm) are presented in Table 5.1.

**Table 5.1**

| Adsorption process time [h] | Dimethylamine adsorption efficiency in the liquid phase [%] | |
|---|---|---|
| | CLI 1-2 mm | CLI 3-5 mm |
| 1 | 78.9 | 88.6 |
| 2 | 92.2 | 84.0 |
| 3 | 89.2 | 87.4 |
| 4 | 92.6 | 87.3 |
| 5 | 56.0 | 53.3 |

The method according to the invention presented in Example No. 5 leads to a highly effective dimethylamine adsorption process in the range of 53-92% in clinoptilolite pores in case of the process carried out in the liquid phase.

### Example 6

The adsorption process of a odorous compound mixture containing acetaldehyde AD, propionic acid PA, pentanoic acid VA and octanoic acid OA in the liquid phase was analysed. In the mixture adsorption tests in the liquid phase, 4g of 5% solution of the mixture composed of: acetaldehyde - 0.5 g, propionic acid - 0.5 g, pentanoic acid - 0.5 g, octanoic acid - 0.5 g dissolved in 40 mL of 96% ethanol as a solvent was used for 4 g of clinoptilolite adsorbent with a fraction of 3-5 mm 50% + activated carbon 50% - 2+2g. The tests were carried out at a temperature of 25°C. The process was carried out for 5 hours, with a sample taken every hour for chromatographic measurements using an Agilent 6890N gas chromatograph with a BP21 FFAP capillary column, 60 m length, and with a diameter of 0.25 mm and a nitrogen-phosphorus detector. The mixture adsorption efficiencywas determined based on the peak areas of the corresponding peaks based on individual standard substances in the initial solution and after the appropriate process time, as described in Example 1.

The results obtained for the clinoptilolite fraction of 3-5 mm are presented in Table 6.1.

**Table 6.1**

| Adsorption process time [h] | Adsorption efficiency in the liquid phase [%] | | | |
|---|---|---|---|---|
| | AD- | PA | VA | OA |
| 1 | 57.6 | 19.3 | 23.1 | 0 |
| 2 | 31.9 | 23.6 | 35.8 | 8.6 |
| 3 | 46.2 | 16.8 | 21.7 | 15.3 |
| 4 | 61.0 | 0 | 23.3 | 15.7 |
| 5 | 35.1 | 21.5 | 29.4 | 14.0 |

The method according to the invention presented in example 6 leads to an effective process of simultaneous adsorption of acetaldehyde in the range of 35-61%, propanoic acid in the range of 0-23%, pentanoic acid in the range of 21-35% and octanoic acid in the range of 0-15% in the clinoptilolite pores and activated carbon in the case of a process carried out in the liquid phase.

### Example 7

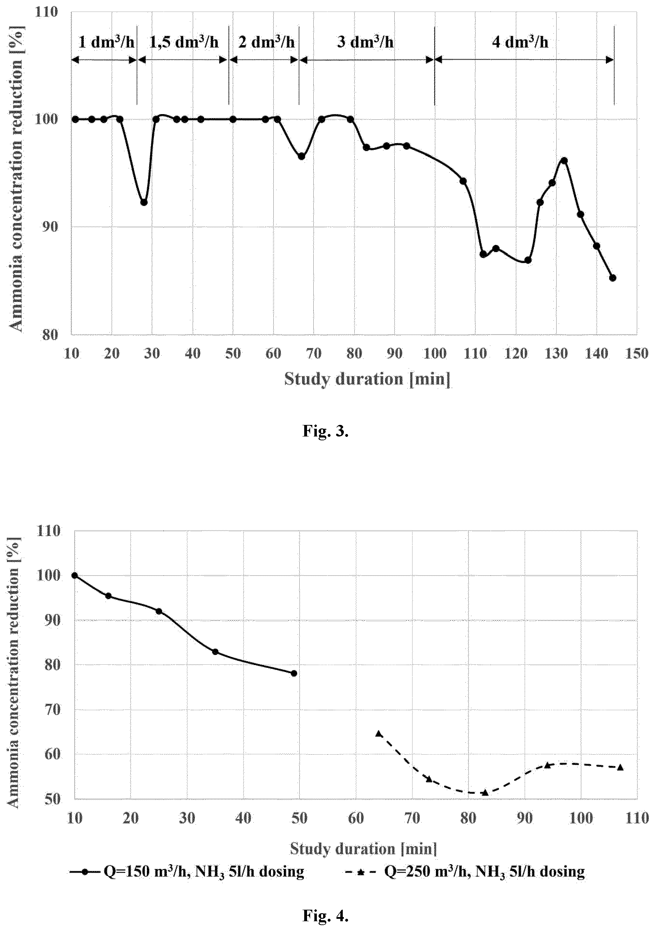

The ammonia adsorption process in the gas phase was analysed on a semi-technical scale. The test results are presented graphically in the Fig. 3, Fig. 4 and Fig. 5. In the tests on the ammonia adsorption in the gas phase, a test stand was used to analyse the adsorption of odorous substances, with a length of approximately 10 m, consisting of many elements installed in a series of tunnels with a rectangular cross-section, measuring 300x200 mm, and periodic tunnels with a diameter of ø160 mm, equipped with an automatic and manual control system.

The tests were carried out at a temperature of 25°C and using a 3-5 mm fraction of clinoptilolite in the form of a 15 cm thick bulk bed, at various flow rates (150, 200, 250, 300, 350 m³/h).

The bulk bed module in which the clinoptilolite was placed consists of a tight housing/tunnel, with dimensions adapted to the ventilation system ducts. There are appropriate flanges at the ends of the module to connect the module to the installation. At the top, the module has a cover used to tightly close the module chamber and replace the bed. On the side vertical walls, the module has guides spaced every 5 cm for mounting vertical meshes enabling different thicknesses of the filter bed (from 0 to 20 cm). The mesh is intended to ensure that the bed geometry is maintained and at the same time does not increase the resistance to mixture flow. This solution enables forming layered deposits with different types of filling and granulation of individual layers.

The ammonia concentration was measured using two identical Nanosens meters. The ammonia concentration was measured after the bed and then before the bed with one meter, and then the same measurement scheme was performed with a second, same meter in order to determine the repeatability of the results.

After each measurement of the ammonia concentration before and after the bed, the meters were cleaned and at the same time, the tunnel and the bed were ventilated with clean air with the ammonia dosing valve closed.

The tests were carried out on a granulated zeolite bed with a fraction of 3-5 mm, the bed thickness was 15 cm. The ammonia dosage was 1-4 dm³/h at a temperature of 25°C, and the flow rate of the air-ammonia mixture was 150 m³/h.

The obtained results indicate that in the 1-2 dm³/h range of ammonia dosing, its reduction is complete, increasing the flow to 3-4 dm³/ h reduces the effectiveness of ammonia reduction, but it is still higher than 80%. Therefore, one can conclude that the efficiency of ammonia removal using a zeolite bed with a grain size of 3-5 mm and an adsorption layer thickness of 15 cm is very high.

At higher ammonia flow volumes, e.g. 5 dm³/h and higher gas flow rates, the efficiency of the bed decreases, as shown in Fig. 4. For a flow rate of 150 m³/h, the ammonia removal efficiency drops to 80% after about an hour. However, in the case of an intensity of 250 m³/h, the ammonia removal efficiency is in the range of 50-65%. Therefore, excessively high gas flows have a negative impact on odour removal.

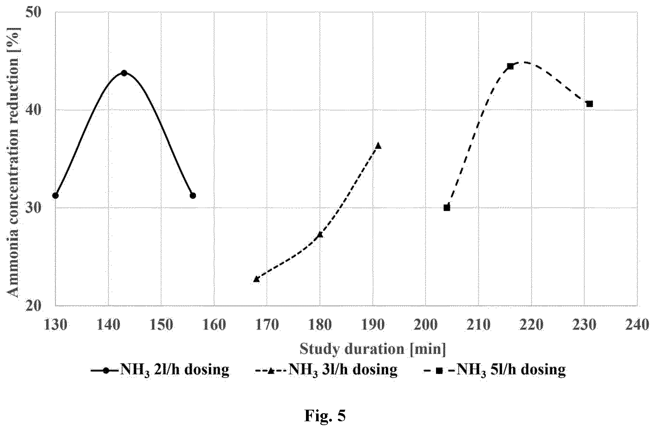

In the next measurement, the effect of ammonia dosing on the efficiency of a 5-cm-thick zeolite bed at a gas flow rate of Q = 150 m³/h and Q = 250 m³/h was examined - Fig. 5. Ammonia was dosed in the amount of 2, 3, 5 dm³/h.

The method according to the invention can very effectively remove ammonia in the range of 50-100%, depending on the gas flow rate through the clinoptilolite bed.

### Example 8

Food industry odour adsorption process was examined in the gas phase on a real scale (using the example of odorous substances generated by fats, especially rapeseed oil at high temperature). In the tests on the food industry odour adsorption in the gas phase, a test stand was used to analyse the adsorption of odorous substances, with a length of 10 m, consisting of many elements installed in a series of tunnels with a rectangular cross-section, measuring 300x200 mm, and periodic tunnels with a diameter of ø160 mm, equipped with an automatic and manual control system. The concentration of the resulting food industry odour mixture fluctuated slightly due to fluctuations in the temperature of the fried fat.

The tests included a scope enabling the fullest possible assessment of the behaviour of the bed in terms of food industry odour adsorption by: dosing a mixture of food industry odours into the fan chamber and passing the resulting mixture through a zeolite bed, assessing the concentration reduction of volatile organic compounds, formaldehyde, ammonia, and hydrogen sulphide for a given bed thickness, measurements of the pressure drop on the bed, assessment of the desorption properties of the bed.

The test was conducted at a constant temperature of 25°C. The air flow rate was constant for each measurement series and amounted to 150 m³/h. Fat was placed in a frying pan placed under a fume hood on an electric induction cooker and then fried until it smoked. After obtaining the desired smoke, the temperature and flow rates of the gas mixture were stabilized. When uniform conditions were achieved, measurements were started. The installation was not ventilated with clean air as was the case in previous tests. In this experiment, the bed was in contact with food industry odours throughout the entire test period, i.e. from the moment the heater was turned on until the end of the test and the removal of the pan from the electric stove.

The results obtained for a clinoptilolite fraction of 3-5 mm and a bed thickness of 15 cm are presented in Table 8.1. Measurements were carried out every 10 minutes.

**Table 8.1**

| Measurement | VOC [ppm] | | VOC concentration reduction [%] | HCHO [ppm] | | HCHO concentration reduction [%] |
|---|---|---|---|---|---|---|
| | Pre-filter | Post-filter | | Pre-filter | Post-filter | |
| 1 | 1.94 | 1.38 | 29 | 1.25 | 0.92 | 26 |
| 2 | 3.33 | 1.51 | 55 | 2.07 | 1.60 | 23 |
| 3 | 3.57 | 1.87 | 48 | 2.19 | 1.83 | 16 |
| 4 | 3.67 | 1.97 | 46 | 2.34 | 2.02 | 14 |
| 5 | 2.02 | 1.61 | 20 | 1.68 | 1.51 | 10 |

The results obtained using the method according to the invention indicate that the odorous gas flow through a 15 cm thick zeolite bed reduces the volatile organic compound (VOC) content in the range of 20-55% and formaldehyde content in the range of 10-26%. Therefore, we can conclude that the efficiency of removing VOCs and formaldehyde using a zeolite bed of 3-5 mm and a thickness of 15 cm is very significant, therefore the method according to the invention can very effectively remove VOCs in the range of 20-55% and formaldehyde in the range of 10-26% .

## Claims

1. A method for reducing odorous compounds produced in food industry and animal husbandry, using absorbing systems consisting of natural zeolite, **characterised in that** a specially prepared sorption material, natural zeolite, clinoptilolite, is used alone or with additives, placed in charging beds, and the thickness adsorption layer is from 5 to 15 cm, and then, exhaust gases containing odorous compounds are passed through the sorbent bed at a speed of 150 m³/h, which adsorb in the clinoptilolite grains, wherein the size of the adsorbent particles ranges from 1-5 mm, the process takes place at a temperature of 20 to 30°C, preferably from 23 to 28°C, and the efficiency of the reduction process ranges from 15-100% and depends on the type of the substance being reduced.

2. The method according to claim 1, **characterised in that** as sorption material zeolite of the clinoptilolite type is used, with a fraction of 2-4 or 3-5 mm and a composition of SiO₂ - 64.18-75.5 %; Na₂O - 0.10-2.97 %; Al₂O₃ - 10.93-14.80 % TiO₂ - 0.08-0.39 %; CaO - 1.43-11.68 % P₂O₅ - 0.01-0.18 %; K₂O - 1.24-4.24 % FeO - 0.29-1.43 %; Fe₂O₃ - 0.12-2.45 % SO₃ - 0.00-0.23 %; MgO - 0.29-1.43 %; Si/Al ratio - 4.8/5.4, and the adsorbent was subjected to a drying process before being introduced into the charging bed, so that the moisture content does not exceed 5%.

3. The method according to claim 1, **characterised in that** zeolite of the clinoptilolite type is used as sorption material with a fraction of 2-4 or 3-5 mm and a composition of SiO₂ - 64.18-75.5 %; Na₂O - 0.10-2.97 %; Al₂O₃ - 10.93-14.80 % TiO₂ - 0.08-0.39 %; CaO - 1.43-11.68 % P₂O₅ - 0.01-0.18 %; K₂O - 1.24-4.24 % FeO - 0.29-1.43 %; Fe₂O₃ - 0.12-2.45 % SO₃ - 0.00-0.23 %; MgO - 0.29-1.43 %; Si/Al ratio - 4.8/5.4, combined with activated carbon with a particle size of 2-4 or 3-5 mm in a 1:1 ratio, and the zeolite was subjected to a drying process before being introduced into the charging bed so that moisture content does not exceed 5%.

4. The method according to claim 1, **characterised in that** zeolite of the clinoptilolite type is used as sorption material, with a particle size of 2-4 or 3-5 mm, in the form of compacted granules, pellets and with the following composition: SiO₂ - 64.18-75.5 %; Na₂O - 0.10-2.97 %; Al₂O₃ - 10.93-14.80 % TiO₂ - 0.08-0.39 %; CaO - 1.43-11.68 % P₂O₅ - 0.01-0.18 %; K₂O -1.24-4.24 % FeO - 0.29-1.43 %; Fe₂O₃ - 0.12-2.45 % SO₃ - 0.00-0.23 %; MgO - 0.29-1.43 %; Si/Al ratio - 4.8/5.4, and the adsorbent was subjected to a drying process before being introduced into the charging bed. so that the moisture content does not exceed 5%.

5. The method according to claim 1, **characterised in that** zeolite of the clinoptilolite type is used as sorption material, with a particle size of 2-4 or 3-5 mm in combination with activated carbon with a particle size of 2-4 or 3-5 mm in a 1:1 ratio, and the zeolite particles are in the form of compacted granules, pellets and the following composition: SiO₂ - 64.18-75.5 %; Na₂O - 0.10-2.97 %; Al₂O₃ - 10.93-14.80 % TiO₂ - 0.08-0.39 %; CaO - 1.43-11.68 % P₂O₅ - 0.01-0.18 %; K₂O - 1.24-4.24 % FeO - 0.29-1.43 %; Fe₂O₃ - 0.12-2.45 % SO₃ - 0.00-0.23 %; MgO - 0.29-1.43 %; Si/Al ratio - 4.8/5.4, and the zeolite, before being introduced into the charging bed, was subjected to a drying process, so that the moisture content does not exceed 5%.

6. The method according to claim 2-5, **characterised in that** the adsorption material, before being introduced into the charging bed, was subjected to a drying process in a rotary dryer, in which the temperature at the entrance of the material being dried to the dryer is 450°C, and the adsorption material has a temperature of 85-90°C at the exit from the dryer, and the residence time of the material in the dryer does not exceed 0.5 hour, during which time the moisture content in the absorbent material decreases from 14% at the entrance to the dryer to a value not exceeding 5% at the exit from the dryer.

7. The method according to claim 1, **characterised in that** waste gases from food industry processes, containing aldehydes, acrolein, amines, volatile organic compounds including acetone, toluene and octane, are the source of odorous gases.

8. The method according to claim 1, **characterised in that** waste gases from breeding processes, containing C1-C9 carboxylic acids, phenol, cresol, ammonia, skatole, indole, are the source of odorous gases.

9. The method according to claim 1, **characterised in that** the adsorption efficiency of odorous nitrogen compounds is from 100 to 92%, preferably the ammonia reduction is up to 100%, and the dimethylamine reduction is up to 92%.

10. The method according to claim 1, **characterised in that** the adsorption efficiency of odorous aldehydes, preferably acetaldehyde, is up to 94%.

11. The method according to claim 1, **characterised in that** the adsorption efficiency of individual odorous carboxylic acids, preferably propionic and/or pentanoic and/or octanoic acids, ranges from 70 to 94%.

12. The method according to claim 1, **characterised in that** the adsorption efficiency of the odorous compound mixture, preferably aldehydes and carboxylic acids, including propionic and/or pentanoic and/or octanoic acids, is, acetaldehyde up to 61%, propanoic acid up to 23%, pentanoic acid up to 35% and octanoic acid up to 15%, respectively.

13. The method according to claim 1, **characterised in that** the adsorption efficiency of the odorous compound mixture, including volatile organic compounds and formaldehyde, is preferably VOC reduction up to 55% and formaldehyde reduction up to 26%.
